# EUROPEAN PATENT APPLICATION

(11) **EP 2 666 359 A1**
(43) Date of publication of application: **27.11.2013**
(21) Application number: 13168481.3
(22) Date of filing: 21.05.2013
(51) Int. Cl.: A01N 59/16, A45D 31/00, A01N 25/12

(54) **Artificial nail product**

(30) Priority: 21.05.2012 CN 201210157469; 29.04.2013 US 201313873207
(71) Applicant: Tianjin Shuang Rong Paper Products Co., Ltd, Tianjin 300150 (CN)
(72) Inventor: Wang, Zhenbiao, 300150 Tianjin (CN)
(74) Representative: De Vries & Metman

(57) **Abstract**

The invention pertains to an antimicrobial artificial nail product, comprising: a nail body comprising a resin, preferably an acrylonitrile butadiene styrene (ABS) resin, and Nano silver antimicrobial agent. The invention further pertains to an antimicrobial artificial nail product wherein an adhesive layer is present on the back side of the nail body and a protective layer on the back side of the adhesive layer.

The invention also pertains to an antimicrobial composition comprising acrylonitrile butadiene styrene (ABS) resin and Nano silver antimicrobial agent, wherein the weight ratio between acrylonitrile butadiene styrene (ABS) resin and Nano silver antimicrobial agent is in the range of 500:1 to 50:1. This composition is particularly suitable for use in an antimicrobial artificial nail product.

## Description

The invention pertains to an artificial nail product. Further subjects of the present invention will become apparent from the further specification.

Artificial nails are conventionally used by persons wishing to improve the appearance of their hands or toes in an easy and reversible manner. There is a continuous search for improvements in the field of artificial nails. The present invention provides such improvement, more specifically an antimicrobial nail product.

According to one embodiment of the present invention, an antimicrobial artificial nail product is provided, comprising:
a nail body comprising a resin and Nano silver antimicrobial agent.

According to another embodiment of the present invention, an antimicrobial composition is provided, comprising acrylonitrile butadiene styrene (ABS) resin and Nano silver antimicrobial agent, wherein the weight ratio between acrylonitrile butadiene styrene (ABS) resin and Nano silver antimicrobial agent is in the range of 500:1 to 50:1. This composition is particularly suitable for use in an antimicrobial artificial nail product.

According to a further embodiment of the present invention, an antimicrobial artificial nail product is provided comprising a nail body, wherein the nail body has a front side and a back side; and further comprises an adhesive layer on the back side of the nail body, said adhesive layer having a front side and a back side, wherein the front side of the adhesive layer is adhered to the back side of the nail body, and a protective layer on the back side of the adhesive layer.

In one embodiment the invention provides an antimicrobial artificial nail product, consisting of a nail body comprising a mixture of ABS resin and Nano silver antimicrobial agent, wherein the weight ratio between ABS resin and Nano silver antimicrobial agent is in the range of 500:1 to 50:1about 200:1, in particular in the range of 400:1 to 100:1, more in particular 250:1 to 150:1, in one embodiment about 200:1.

Further embodiments of the present invention will become apparent from the further specification and the claims.

The present invention will be illustrated by the attached figures, without being limited thereto or thereby.

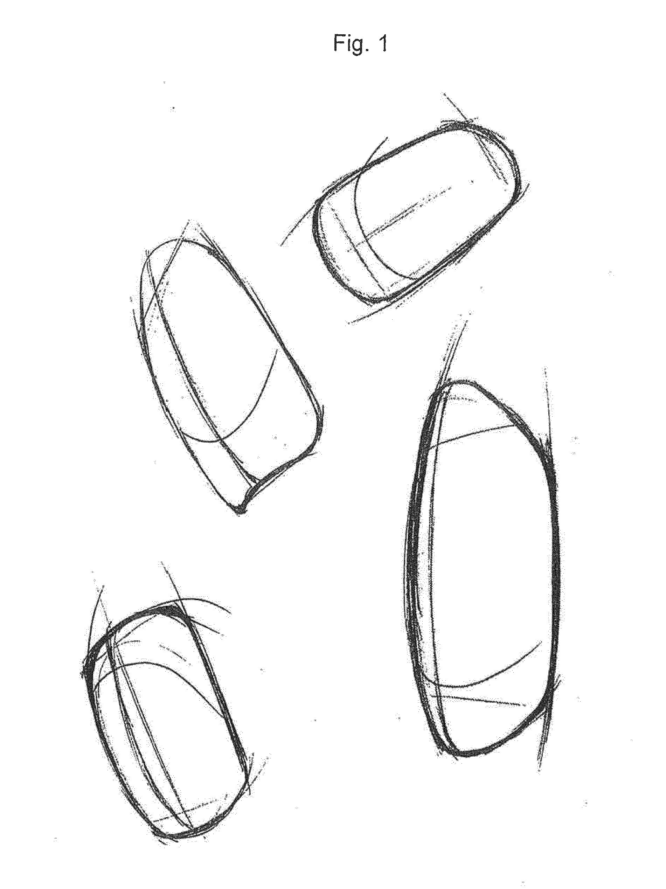

Figure 1 shows sketches of various antimicrobial artificial nail products;
Figure 2 illustrates the layer construction of one embodiment of an antimicrobial artificial nail product;

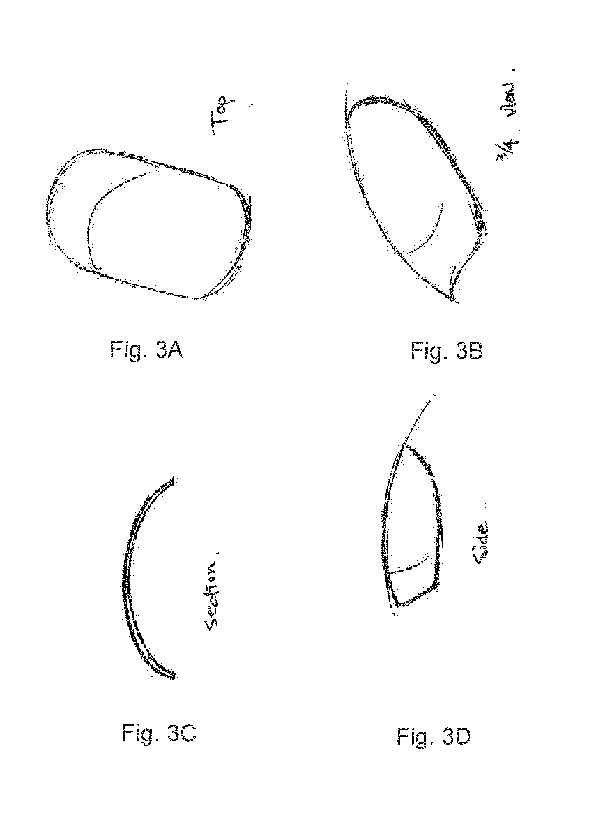

Figures 3A-3D illustrate a top view (3A), angled view (3B), cross-section view (3C), and side view (3D) of one embodiment of the artificial fingernail.
Figure 4 is a flow chart showing one embodiment of a process of making an antimicrobial composition.

In one embodiment, the antimicrobial artificial nail product according to the invention comprises a nail body comprising a resin and Nano silver antimicrobial agent. It has been found that an artificial nail product meeting this requirement effectively reduces the amount of germs that are left on people's skin in their daily lives. Preferably, the nail body in the antimicrobial artificial nail product according to the invention comprises acrylonitrile butadiene styrene (ABS) resin, as this resin has been found to show high impact resistance, good appearance, and other attractive properties which will be discussed in more detail below.

In one embodiment, the weight ratio between the resin, in particular the ABS resin and Nano silver antimicrobial agent is in the range of 500:1 to 50:1, preferably 400:1 to 100:1, more in particular 250:1 to 150:1, in one embodiment about 200:1.

The minimum amount of silver is determined by the amount required to obtain an antimicrobial effect. The maximum amount is determined by cost considerations, and by the fact that the presence of silver should not interfere with the properties of the resin.

Selecting the amount of silver within this range not only makes the resin, in particular ABS resin, antimicrobial, but it does not affect the original state of the resin, in particular the ABS resin, which enables this antimicrobial material to be widely used in cosmetic products and the nail beautifier field, in particular the field of artificial nails, that utilizes resin, in particular ABS resin.

Using this type of antimicrobial material can effectively reduce the amount of germs that are left on people's skin in their daily lives. This shows the antimicrobial function of the material and that the material is toxin-free and harmless and serves the purpose of protecting people's health.

In one embodiment the invention pertains to an antimicrobial artificial nail product, consisting of a nail body comprising a mixture of ABS resin and Nano silver antimicrobial agent, wherein the weight ratio between ABS resin and Nano silver antimicrobial agent is in the range of 500:1 to 50:1, in particular in the range of 400:1 to 100:1, more in particular 250:1 to 150:1, in one embodiment about 200:1.

In one embodiment of the invention, the nail body in the antimicrobial artificial nail product has a front side and a back side; and further comprises an adhesive layer on the back side of the nail body, said adhesive layer having a front side and a back side, wherein the front side of the adhesive layer is adhered to the back side of the nail body, and a protective layer on the back side of the adhesive layer. The protective layer is removable by the user. Upon removal of the protective layer, the adhesive layer can be used to adhere the artificial nail product to the nail of the user.

This embodiment solves the following problem: Traditionally, fast drying glue is applied to the back of an artificial nail and is adhered to the actual fingernail of a person. This traditional method has strong adhesiveness, but it may be harmful to the fingernail due to the chemical compounds in the glue. Also, chemical solvent is used when removing the artificial fingernail, which may cause harm to the human body. As such, it is desirable to provide a new and improved artificial nail that does not produce any harmful effects. The embodiment wherein the artificial nail product is provided with an adhesive layer and a protective layer solves this problem. It has guaranteed adhesiveness and is easy to apply on the nail by the user, without requiring the use of separate glue. At the same time it does not harm the human body and is easy to remove.

In the above, the front side of the nail body is the side which will be visible once the nail body has been applied. The back side is the side facing the actual fingernail of a person.

It is preferred for the adhesive layer to be in the middle of the back of the artificial fingernail, i.e., centered around a center line running from the top to the bottom of the nail.

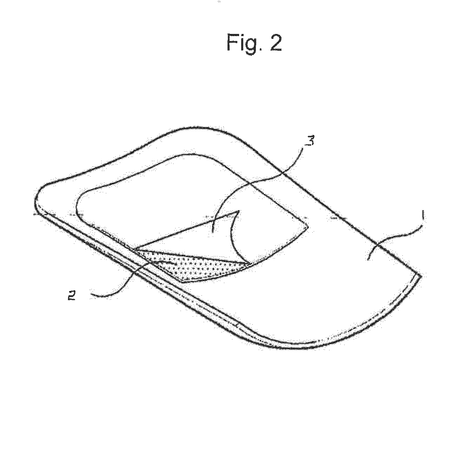

This embodiment is illustrated in Figure 2, wherein an artificial fingernail includes a nail body (1) of the artificial fingernail; an adhesive layer (2) on the back side of the nail body (1); and a protection layer (3) on the back side (the side facing the actual fingernail of a person) of the adhesive layer (2). The adhesive layer (2) is placed in the middle section of the back side of the artificial fingernail (1) (i.e., centered around a center line running from the top to the bottom of the nail). In one embodiment, the adhesive layer (2) covers a bottom section (i.e., opposite to the top section of a fingernail) of the artificial fingernail. In another embodiment, the adhesive layer (2) covers about 3/4 of the artificial fingernail from the bottom of the nail. In yet another embodiment, the adhesive layer (2) covers about the full length of the artificial fingernail. Embodiments of the present invention provide the following result: A perfect attachment as the adhesive layer is designed according to the curvature of the artificial fingernail, which reproduces the curvature in a 1:1 ratio.

The nail body (1) can be made of any suitable material through any suitable process. Exemplary suitable plastic materials include SBS resin, EVA resin, ABS resin, polycarbonate resin, or combinations thereof. In one embodiment of the invention, the nail body (1) is made of ABS resin. Example process can be injection molding, casting and other suitable processes. The adhesive layer (2) is made of synthetic polymeric sheet materials. The adhesive layer (2) provides suitable adhesion force so that the artificial fingernail can stick to the end user's fingernails as long as the user intends to, and can be peeled off without the use of any organic or harmful solvents.

In one embodiment of the invention, the adhesive layer includes pressure sensitive adhesives. Suitable pressure sensitive adhesives can be emulsion based, solvent based, or hot-melt based. Suitable pressure sensitive adhesives can be rubber based, acrylic based, silicone based and any other suitable composition. The pressure sensitive adhesives are tacky under application of slight pressure and can be removed cleanly without the use of a solvent. The protection layer (3) can be made of any suitable material such as release coated paper, release coated polymer film, polyethylene, polypropylene, polyvinyl chloride and others.

In one embodiment, a positioning hole is added to the nail body with a clamping tool. The positioning hole can be used together with locating pin on a turntable to provide accurate positioning and to prevent the mis-positioning of the adhesive layer due to movement of the turntable during the manufacturing process. This will increase the quality and production efficiency of the artificial fingernail products.

One embodiment of a method of making the artificial fingernail is as follows: first, place the nail body (1) of the artificial fingernail on a clamping tool to machine a positioning hole. Then position the nail body (1) accurately with the positioning hole on the nail body matching the locating pin on the turn table. The nail body (1) is placed so that the back side, (i.e., the side to face the actual fingernail of a person) is easily accessible to the operator or a robot. Next, place the adhesive layer (2) in the middle of the back side of the artificial fingernail body (1). The adhesive layer (2) with a protection layer (3) on the back side can be transferred from a source location to the nail body (1) using vacuum. The artificial fingernail made with this unique production method and design will prevent the misplacement of the adhesive layer when there is movement to the turntable. The end user will peel off the protection layer (3) of the artificial fingernail and place the artificial fingernail with the adhesive layer (2) contacting one's own fingernail. The above mentioned adhesive layer (2) is made of an elastic polymeric material that has a certain thickness and can be used to provide adhesion to the actual fingernail of a person, and also has a buffering effect. Therefore, it feels comfortable after the person puts it on and the strength of the adhesion is just right. When the user decides to remove the artificial fingernail, it can be simply peeled off the user's finger without the use of any organic solvents.

As indicated above, Nano silver is used in the present invention as antimicrobial agent. Nano silver has silver particles with a diameter in nano-scale. In one embodiment the average diameter of the nanosilver particles is in the range of 5-100 nm, in particular 10-100 nm, e.g., 10-50 nm. In one embodiment the average diameter of each particle is about 30 ± 10 (nm).

In one embodiment Nano silver antimicrobial agent is provided in the form of a white liquid made from the ionic exchange of nano-sized titanium dioxide and silver. The amount of nano-sized silver in the antimicrobial agent is, for example about 0.5-10 wt.%, in particular 1-5 wt.%, for example 1.8%-3.6%. The pH is e.g., in the range of 7-11, in particular in the range of 6-8.

In one embodiment, Nano-silver is provided in the form of nano-sized silver (Ag) particles suspended in pure de-ionized water. In one embodiment, 50-100 wt.% of the silver, e.g., approximately 80% of the silver, is in the form of metallic silver nanoparticles. The remaining silver is in ionic form.

In various embodiments of the present invention acrylonitrile butadiene styrene (ABS) is used. ABS (chemical formula (C₈H₈)x• (C₄H₆)y•(C₃H₃N)z) is a thermoplastic material. In one embodiment the glass transition temperature of ABS, which is an amorphous material and therefore has no true melting point, is approximately 105 °C (221 °F). It is a copolymer made by polymerizing styrene and acrylonitrile in the presence of polybutadiene. The weight ratio can, for example, vary from 15 to 35% acrylonitrile, 5 to 30% butadiene and 40 to 60% styrene. Not wishing to be bound by theory, it is believed that the reaction product is a long chain of polybutadiene criss-crossed with shorter chains of poly(styrene-co- acrylonitrile). The nitrile groups from neighboring chains, being polar, attract each other and bind the chains together, making ABS stronger than pure polystyrene. The styrene gives the plastic a shiny, impervious surface. The butadiene, a rubbery substance, provides elasticity and resilience even at low temperatures. For majority of applications, ABS can be used between -20 and 80 °C (-4 and 176 °F) as its mechanical properties vary with temperature. The properties are created by rubber toughening, where fine particles of elastomeric polybutadiene are distributed throughout the rigid matrix of styrene-acrylonitrile.

In one embodiment ABS resins are used in the present invention which are light yellow, non-transparent resin material in granular shapes. These resins possess the characteristics of impact resistance, heat resistance, cold resistance, chemical resistance, excellent electrical performance, ease of processing, consistent product size, nice luster and other benefits.

However, when used in cosmetic nail product, the ingredient is not antimicrobial and large amount of germs will grow and stay on the surface of the product and could potentially be harmful to the health. Not wishing to be bound by theory it is believed that the science behind the anti- bacteria function is that Nano silver antimicrobial agent releases positively charged ions at a controlled speed, which are attached to the openings of the cell walls of germs and mildew and destroying microorganisms' electron transport system, respiratory system, and material transfer system to quickly destroy bacteria. To achieve a breakthrough, one has to figure out how to organically combine the 2 agents mentioned above to use as a material for cosmetic fingernails.

Due to the lack of structure in current technology, the purpose of this invention is to provide a type of nail product and an antimicrobial agent to enable ABS resin to be antimicrobial after being mixed with Nano silver and at the same time preserve the other physical and chemical properties of the original ABS resin. It paved a new path for the artificial nail industry. In one embodiment, the antimicrobial composition can be included in any layer of an artificial fingernail.

To achieve the above purpose, in one embodiment the invention provides an antimicrobial composition, suitable for artificial fingernails, which comprises acrylonitrile butadiene styrene (ABS) resin and Nano silver antimicrobial agent, wherein the weight ratio between acrylonitrile butadiene styrene (ABS) resin and Nano silver antimicrobial agent is in the range of 500:1 to 50:1. In particular, the weight ratio between acrylonitrile butadiene styrene (ABS) resin and Nano silver antimicrobial agent is in the range of 400:1 to 100:1, more in particular 250:1 to 150:1, in one embodiment about 200:1. According to embodiments of the invention, Nano silver antimicrobial agents are added to the ABS resin to create a new material for artificial nails that is antimicrobial.

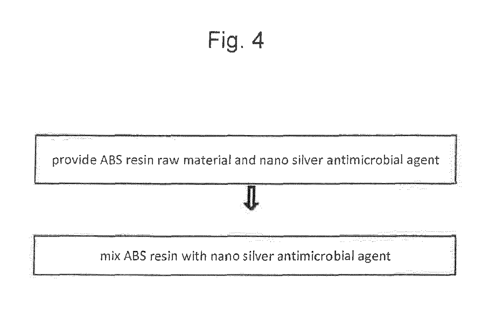

Figure 4 is a flow chart showing an embodiment of a process of making the antimicrobial material. Referring to Figure 4, first, ABS resin raw material and Nano silver antimicrobial agent are provided. Next, ABS resin is mixed with Nano silver antimicrobial agent to make the antimicrobial material. The nano silver can be provided in an amount in accordance with the weight ratio's specified above in the description of the artificial nail product. Mixing and stirring are to be conducted thoroughly.

The mixed materials can be used as a new antimicrobial material, enabling ABS resin, with unchanged physical and chemical characteristics, to become antimicrobial.

It is noted that properties of the resin, in particular the ABS resin and the nano silver which are described above in the context of one embodiment of the invention will also be applicable to other embodiments of the invention.

The invention will be illustrated by the following examples, without being limited thereto or thereby.

### Examples

The nail product can be made by the following exemplary process: first, prepare 200 parts (i.e., 200 grams) of ABS resins and one part (i.e., one gram) of Nano silver antimicrobial agent.

Second, place them into an automatic mixer and mix them at the speed of about 40 rotations/minute (rpm) for 30 minutes. Lastly, take small amount of sample material and place them under a microscope for testing. It is considered meeting the standard if there is 50% or greater silver particles scattered in the material, which signifies the successful creation of new antimicrobial material for nail products. If the testing failed, it is most likely due to insufficient mixing and stirring time, i.e., less than 30 minutes.

One shall inspect the ratio instruction and automatic mixing and stirring machines and continue mixing at 40 rotations/minute for 10-30 minutes, or continue until meeting the standard examined under a microscope.

A sample made according to the exemplary process has been tested for anti-bacterial activities and anti-fungal activities according to QB/T 2591-2003. For anti-bacterial activities, two strains of bacteria were tested: bacterium 1-- Escherichia coli ATCC 25922, and bacterium 2-- Staphylococcus aureus ATCC 6538. A standard polyethylene (PE) was used as the control. Table 1 summarizes the number of bacteria counted at the beginning of the test and after 24 hours of the test. For anti-fungal activities, six types of fungi were used and a 25 mm x 25 mm strip of filter paper was used as a control sample. Table 2 is a list of the fungi used and table 3 is a summary of the degree of fungi (mold) growth after a number of days of testing. The degree of mold growth was determined by examination under a microscope with a 50 x lens. A 0 degree growth indicates no mold growth, first degree growth indicates positive mold growth with less than 10% growth, and second degree growth indicates equal to or greater than 10% growth.

As can be observed from Table 1, the amount of each bacterium in the antimicrobial sample made according to the exemplary process of the present invention is undetectable at the beginning of the test while the control sample has over 10⁵ bacterial counts for each bacterium, indicating good anti-bacterial property of the antimicrobial product. Even after 24 hours, the amount of bacteria count is less than 20 for the antimicrobial product, while that increased to over 3.8 x 10⁶ for the control sample. The test results demonstrated strong anti-bacterial property of the antimicrobial product.

Referring to table 3, after just 7 days, the control sample had a second degree mold growth and the mold covered 100% of the sample area. On the contrary, after even 28 days, the antimicrobial sample had 0 degree of mold growth. This test result demonstrated strong anti-fungal property of the antimicrobial product.

**Table 1**

| | | Control | Test Sample |
|---|---|---|---|
| Test Bacteria 1 | At beginning | 1.9 x 10⁵ | -- |
| | After 24 hrs | 5.3 x 10⁶ | < 20 |
| | % reduction of bacteria | -- | >99 |
| Test Bacteria 2 | At beginning | 1.1 x 10⁵ | -- |
| | After 24 hrs | 3.8 x 10⁶ | <20 |
| | % reduction of bacteria | -- | >99 |

**Table 2**

| Fungi | Number |
|---|---|
| *Aspergillus niger* | AS 3.4463 (ATCC 6275) |
| *Aspergillus terreus* | AS 3.3935 |
| *Chaetoomium globsum* | AS 3.4254 |
| *Penicillium funiculosum* | AS 3.3875 |
| *Aureobasium Pullulans* | AS 3.3984 |
| *Paecilomyces vaioti* | AS 3.4253 |

**Table 3**

| | Days of Testing | Degree of Mold Growth | Area of Mold Growth |
|---|---|---|---|
| Control | 7 | second | 100% |
| Sample | 28 | 0 | 0 |

The antimicrobial material can be used to make the nail body, the adhesive layer, and other nail related products. In one embodiment, the antimicrobial material is used to make an artificial fingernail. The artificial fingernail has a nail body and the nail body is made of a material including the antimicrobial material described above. In another embodiment, the artificial fingernail has a nail body, an adhesive layer and a protective layer. The antimicrobial material is used to make the nail body.

Although aspects of the foregoing invention has been described in some detail for purposes of clarity, it will be apparent that certain changes and modifications may be made without departing from the principles of the present invention. It should be noted that there are many alternative ways of implementing both the product and composition of the present invention. Accordingly, the present embodiments are to be considered as illustrative and not restrictive, and the invention is not to be limited to the specific details given herein. Further, it will be understood that those skilled in the art, both now and in the future, may make various improvements and enhancements which fall within the spirit and scope of the claims which follow, or equivalents thereof.

## Claims

1. An antimicrobial artificial nail product, comprising:
a nail body comprising a resin and Nano silver antimicrobial agent.

2. The antimicrobial artificial nail product of claim 1, wherein the weight ratio between resin and Nano silver antimicrobial agent is in the range of 500:1 to 50:1, preferably 400:1 to 100:1, more in particular 250:1 to 150:1, in one embodiment about 200:1.

3. The antimicrobial artificial nail product of claim 1 or 2 wherein the nail body comprises acrylonitrile butadiene styrene (ABS) resin.

4. The antimicrobial artificial nail product of claim 3, wherein the weight ratio between acrylonitrile butadiene styrene (ABS) resin and Nano silver antimicrobial agent is in the range of 500:1 to 50:1, preferably 400:1 to 100:1, more in particular 250:1 to 150:1, in one embodiment about 200:1.

5. The antimicrobial artificial nail product of any one of the preceding claims, wherein the nail body has a front side and a back side; and further comprises an adhesive layer on the back side of the nail body, said adhesive layer having a front side and a back side, wherein the front side of the adhesive layer is adhered to the back side of the nail body, and a protective layer is present on the back side of the adhesive layer.

6. The antimicrobial artificial nail product of claim 5, wherein the adhesive layer is in the middle of the back side of the artificial nail product.

7. An antimicrobial composition, comprising acrylonitrile butadiene styrene (ABS) resin and Nano silver antimicrobial agent, wherein the weight ratio between acrylonitrile butadiene styrene (ABS) resin and Nano silver antimicrobial agent is in the range of 500:1 to 50:1.

8. The antimicrobial composition of claim 7, wherein the weight ratio between acrylonitrile butadiene styrene (ABS) resin and Nano silver antimicrobial agent is in the range of 400:1 to 100:1, more in particular 250:1 to 150:1, in one embodiment about 200:1.

9. An antimicrobial artificial nail product, consisting of:
a nail body comprising a mixture of ABS resin and Nano silver antimicrobial agent, wherein the weight ratio between ABS resin and Nano silver antimicrobial agent is in the range of 500:1 to 50:1, in particular in the range of 400:1 to 100:1, more in particular 250:1 to 150:1, in one embodiment about 200:1.
